# EUROPEAN PATENT APPLICATION

(11) **EP 4 563 861 A1**
(43) Date of publication of application: **04.06.2025**
(21) Application number: 23845722.0
(22) Date of filing: 28.07.2023
(51) Int. Cl.: F16K 31/02

(54) **FOUR-WAY VALVE**

(30) Priority: 29.07.2022 CN 202222028456 U; 29.07.2022 CN 202222028466 U; 29.07.2022 CN 202222025197 U; 31.07.2022 CN 202222030017 U; 31.07.2022 CN 202222030019 U
(71) Applicant: Zhejiang Dunan Artificial Environment Co., Ltd., Shaoxing Zhejiang 311835 (CN)
(72) Inventor: JIN, Huahai, Shaoxing, Zhejiang 311835 (CN); XUAN, Yongbin, Shaoxing, Zhejiang 311835 (CN); SHOU, Zhouyang, Shaoxing, Zhejiang 311835 (CN); HE, Kun, Shaoxing, Zhejiang 311835 (CN)
(74) Representative: Viering, Jentschura & Partner mbB Patent- und Rechtsanwälte
(86) International application number: PCT/CN2023/109971
(87) International publication number: WO 2024/022518

(57) **Abstract**

A four-way valve (100) is provided. The four-way valve (100) includes a valve body (10), a valve core (20) and a sealing assembly (30). An axial mounting groove (21) extending along an axis of the valve core (20) is formed on an outer surface of the valve core (20); alternatively, an axial mounting groove (21) extending along an axis of the valve body (10) is formed on an inner surface of the valve body (10). The sealing assembly (30) is at least partially mounted in the axial mounting groove (21), and the sealing assembly (30) includes a first sealing member (31) and a second sealing member (32), wherein the first sealing member (31) is made of a metal material, and the second sealing member (32) is made of a non-metal material.

## Description

### CROSS-REFERENCE TO RELATED APPLICATIONS

This application claims priority to Chinese patent application No. 202222025197.7, filed on July 29, 2022, and titled "four-way valve", Chinese patent application No. 202222028466.5, filed on July 29, 2022, and titled "multi-ported valve", Chinese patent application No. 202222030019.3, filed on July 31, 2022, and titled "multi-ported valve", Chinese patent application No. 202222030017.4, filed on July 31, 2022, and titled "multi-ported valve", and Chinese patent application No. 202222028456.1, filed on July 29, 2022, and titled "driving mechanism and four-way valve including same", The contents of which are hereby incorporated by reference in their entireties.

### TECHNICAL FIELD

The present application relates to the field of refrigeration, in particular, to a four-way valve.

### BACKGROUND

Four-way valves are commonly used in a pipeline for conveying media, generally including a valve body and a valve core. The valve body is provided with four liquid-communicating ports uniformly disposed along a circumference of a side wall of the valve body, and the valve core is mounted in the valve body and is capable of rotating in the valve body for switching a flow path.

In related art, a high-pressure chamber and a low-pressure chamber are defined between the valve core of the four-way valve and the valve body of the four-way valve. In order to maintain a relative seal between the high-pressure cavity and the low-pressure cavity, a sealing member is provided on the valve core to enhance the leakproofness of the four-way valve, so as to prevent an internal leakage caused by the fluid circulating between the high-pressure cavity and the low-pressure cavity. However, the sealing member in the related art is made of metal, and the sealing member is elastically fitted with the valve body. After long-term use, the sealing member will be worn and scratched, resulting in the valve body also being scratched, which in turn affects the sealing of the four-way valve and affects the use of the product.

### SUMMARY

On the basis of embodiments of the present disclosure, a four-way valve is provided, which includes a valve body, a valve core and a sealing assembly; the valve body is provided with a valve chamber, the valve core is rotatably disposed in the valve chamber, an axial mounting groove extending along an axis of the valve core is disposed on an outer surface of the valve core, optionally, an axial mounting groove extending along an axis of the valve body is disposed on an inner surface of the valve body; at least a part of the sealing assembly is disposed in the axial mounting groove; the sealing assembly includes a first sealing member and a second sealing member, the second sealing member is located at a side of the first sealing member adjacent to an inner surface of the valve chamber and is connected to the first sealing member, and a side of the second sealing member away from the first sealing member abuts against the inner surface of the valve chamber and the side of the second sealing member away from the first sealing member to form a sealing fit; optionally, the second sealing member is located at a side of the first sealing member adjacent to the valve core and is connected to the first sealing member, and a side of the second sealing member away from the first sealing member is capable of abutting against the valve core to form a sealing fit. A material of the first sealing member is a metal material, and a material of the second sealing member is a non-metal material.

Details of one or more embodiments of the present application are set forth in the following accompanying drawings and description in order to make the other features, purposes and advantages of the present application more concise and understandable.

### BRIEF DESCRIPTION OF THE DRAWINGS

In order to more clearly illustrate the technical solutions in the embodiments of the present application or in the related art, the accompanying drawings to be used in the description of the embodiments or the related art will be briefly described below. Obviously, the accompanying drawings in the following description are only embodiments of the present application. To a person of ordinary skill in the art, other drawings can be obtained according to the disclosed drawings without creative labour.
FIG. 1 is a sectional view of a four-way valve in one or some embodiments.
FIG. 2 is an enlarged figure of A portion in FIG. 1.
FIG. 3 is a structural schematic diagram of a sealing assembly in one or some embodiments.
FIG. 4 is a sectional view of a sealing assembly in one or some embodiments.
FIG. 5 is an explosive diagram of a sealing assembly in one or some embodiments.
FIG. 6 is a structural schematic diagram of a sealing assembly in one or some embodiments.
FIG. 7 is a sectional view of a four-way valve in one or some embodiments.
FIG. 8 is a schematic diagram of B portion in FIG. 7.
FIG. 9 is a structural schematic diagram of a sealing member in one or some embodiments.
FIG. 10 is a sectional view of a four-way valve in one or some embodiments.
FIG. 11 is a partial schematic diagram of F portion in FIG. 10.
FIG. 12 is a structural schematic diagram of a sealing member in one or some embodiments.
FIG. 13 is a structural schematic diagram of a valve core in one or some embodiments.
FIG. 14 is a structural schematic diagram of an end cap in one or some embodiments.
FIG. 15 is a bottom view of an end cap in one or some embodiments.
FIG. 16 is a sectional view of a valve core in one or some embodiments.
FIG. 17 is a structural schematic diagram of a valve core in one or some embodiments.
FIG. 18 is a sectional view of a valve core in one or some embodiments.
FIG. 19 is a structural schematic diagram of a four-way valve in a refrigerating state in one or some embodiments.
FIG. 20 is a structural schematic diagram of a four-way valve in a heating state in one or some embodiments.
FIG. 21 is a structural schematic diagram of a four-way valve in one or some embodiments.
FIG. 22 is a partial schematic diagram of G portion in FIG. 21.
FIG. 23 is a partial schematic diagram of a driving assembly in one or some embodiments.
FIG. 24 is a partial sectional view of a driving assembly in one or some embodiments.
FIG. 25 is a structural schematic diagram of a box body in one or some embodiments.
FIG. 26 is a structural schematic diagram of a cap body in one or some embodiments.

In the figures,
100 represents a four-way valve; 10 represents a valve body; 11 represents a valve chamber; 12 represents a communicating port; 13 represents an accommodating port; 20 represents a valve core; 201 represents an axial mounting groove; 202 represents a circumferential mounting groove; 203 represents a first restricting groove; 204 represents a second restricting groove; 205 represents an assembling groove; 2051 represents a first groove section; 2052 represents a second groove section; 21 represents a first end plate; 22 represents a connecting plate; 23 represents a second end plate; 24 represents a non-magnetic conductive portion; 25 represents a second restricting member; 26 represents a responding member; 30 represents a sealing assembly; 31 represents a first sealing member; 311 represents a groove; 312 represents a supporting portion; 313 represents a restricting protrusion; 32 represents a second sealing member; 321 represents a main body; 322 represents an abutting portion; 40 represents an elastic member; 50 represents a circumferential sealing member; 51 represents an incision; 511 represents a first endpoint; 512 represents a second endpoint; 52 represents a first sealing portion; 53 represents a second sealing portion; 54 represents a sealing section; 55 represents a reference radial line; 56 represents a ring-shaped structure; 60 represents a driving assembly; 61 represents a driving member; 611 represents a connecting end; 6111 represents a protruding portion; 612 represents a driving end; 62 represents an actuating shaft; 621 represents a output shaft; 622 represents a transmission shaft; 6221 represents an axial restricting portion; 6222 represents a first section; 6223 represents a second section; 6224 represents a third section; 6225 represents a clamping slot; 63 represents a box body; 631 represents a mounting port; 632 represents an accommodating chamber; 633 represents a second connecting hole; 634 represents a second arc-shaped section; 635 represents a second straight section; 6351 represents a wire hole; 636 represents a connecting member; 637 represents a second fastener; 64 represents a cap body; 641 represents a plate body; 642 represents a bending portion; 6421 represents a first connecting hole; 6422 represents a first arc-shaped section; 6423 represents a first straight section; 65 represents a controller; 651 represents a wire; 66 represents a first fastener; 67 represents a waterproofing member; 70 represents an end cap; 71 represents a first restricting member; 72 represents a through hole; 73 represents a guiding protrusion; 74 represents a sensing member; 80 represents a first bearing; 81 represents a first rotating portion; 82 represents a second rotating portion; 83 represents a rolling member; and 90 represents a second bearing.

### DETAILED DESCRIPTION

The technical solutions in the embodiments of the present application will be described clearly and completely in the following, in conjunction with the accompanying drawings in the embodiments of the present application. Obviously, the described embodiments are only a part of the embodiments of the present application, but not all of the embodiments. Based on the embodiments in the present application, all other embodiments obtained by a person of ordinary skill in the art without creative labour fall within the scope of protection of the present application.

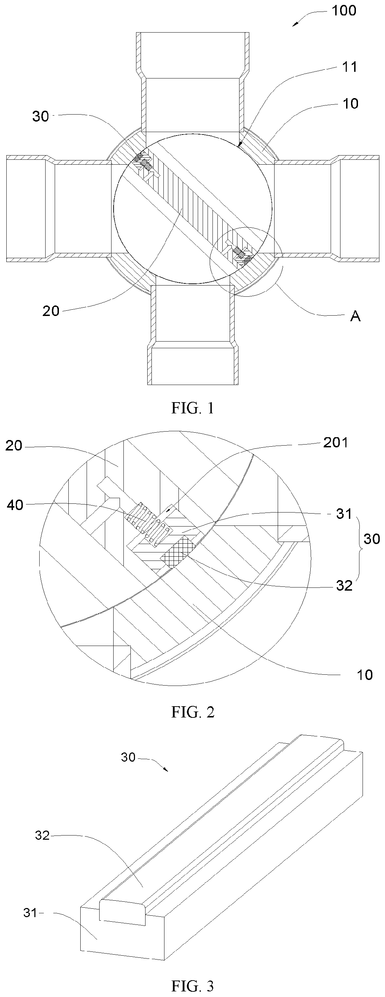

Referring to FIG. 1, a four-way valve 100 is provided in the present application, and the four-way valve 100 is applied in a refrigeration system.

Four-way valves are commonly used in a pipeline for conveying media, generally including a valve body and a valve core. The valve body is provided with four liquid-communicating ports uniformly disposed along a circumference of a side wall of the valve body, and the valve core is mounted in the valve body and is capable of rotating in the valve body for switching a flow path.

In related art, a high-pressure chamber and a low-pressure chamber are defined between the valve core of the four-way valve and the valve body of the four-way valve. In order to maintain a relative seal between the high-pressure cavity and the low-pressure cavity, a sealing member is provided on the valve core to enhance the leakproofness of the four-way valve, so as to prevent an internal leakage caused by the fluid circulating between the high-pressure cavity and the low-pressure cavity. However, the sealing member in the related art is made of metal, and the sealing member is elastically fitted with the valve body. After long-term use, the sealing member will be worn and scratched, resulting in the valve body also being scratched, which in turn affects the sealing of the four-way valve and affects the use of the product.

In order to solve the problems above, referring to FIG. 1, FIG. 2 and FIG. 7, the present disclosure provides a four-way valve 100, which includes a valve body 10, a valve core 20 and a sealing assembly 30. The valve body 10 includes a valve chamber 11, an accommodating port 13 communicating with the valve chamber 11 and a plurality of communicating ports 12. The accommodating port 13 is disposed at on end of the valve body 10, the plurality of communicating ports 12 are disposed around a side wall of the valve body 10 along a circumference of the valve body 10. In some embodiments, the number of the communicating ports 12 is four, and the four communicating ports 12 spaced from each other along a circumference of the valve body 10. The valve core 20 is disposed in the valve chamber 11 and capable of rotating in the valve chamber 11. The valve core 20 can adjust communication states between the plurality of communicating ports 12. The sealing member 30 includes a first sealing member 31 and a second sealing member 32. A material of the first sealing member 31 is a metal material, and a material of the second sealing member 32 is a non-metal material.

In some embodiments, referring to FIG. 1 and FIG. 2, an axial mounting groove 201 extending along an axis of the valve core 20 is disposed on an outer surface of the valve core 20, at least a part of the sealing assembly 30 is disposed in the axial mounting groove 201. The second sealing member 32 is located at a side of the first sealing member 31 adjacent to the valve chamber 11, and connected to the first sealing member 31. A side of the second sealing member 32 away from the first sealing member 31 abuts against the inner surface of the valve chamber 11 to form a sealing fit.

In the four-way valve 100 of present application, a sealing performance of the four-way valve 100 is improved by setting the sealing assembly 30. Specifically, in one aspect, the first sealing member 31 made of a metal material can ensure that a rigid fit is formed between the sealing assembly 30 and the valve core 20, so as to facilitate elastic deformation of the sealing assembly 30, and situation of jamming will hardly occur. In another aspect, the second sealing member 32 made of a non-metal material abuts against the valve body 10, so as to avoid situations that in the related art, such as a metal sealing member scratches the valve body 10, causing leakage of the fluid, can be avoided. Thus the sealing performance and abrasion resistance of the four-way valve 100 is improved, and a service life of the four-way valve 100 is prolonged. At the same time, the axial mounting groove 201 is provided on the outer surface of the valve core 20, the first sealing member 31 and the second sealing member 32 are disposed in the axial mounting groove 201, so that an assembly efficiency is improved. In the process that the valve core 20 rotates, the first sealing member 31 and the second sealing member 32 are not easily to fall off from the axial mounting groove 201, so that performance of the four-way valve 100 can be improved.

Specifically, the material of the first sealing member 31 is any one selected from brass, high-carbon steel or cast iron. The material of the first sealing member 31 has relative good rigidity and hardness, which facilitate elastic deformation between first sealing member 31 and the valve core 20, thus situation of jamming is not easily to occur. The material of the second sealing member 32 is any one selected from PTFE, PA66 or PPS, which has high abrasive resistance and do not need to be changed frequently. Thus, the second sealing member can meet a long-term use requirement of the four-way valve 100, so as to reduce the cost.

Referring to FIG. 3 to FIG. 6, the side of the first sealing member 31 adjacent to the inner surface of the valve chamber 11 is provided with a groove 311, a part of the second sealing member 32 extends into the groove 311 and is connected to the first sealing member 31, and a side of the second sealing member 32 away from the groove 311 abuts against the inner surface of the valve chamber 11. By providing the groove 311, a connection area between the first sealing member 31 and the second sealing member 32 is improved, so that a connecting strength between the first sealing member 31 and the second sealing member 32 is improved. In addition, a part of the second sealing member 32 is located outside the groove 311 and abuts against the inner surface of the valve chamber 11, so that problem of abrasion caused by long-term abutting between the first sealing member 31 and the inner surface of the valve chamber 11 can be avoided.

In some embodiments, referring to FIG. 3, the first sealing member 31 is connected to the second sealing member 32 by method of sticking.

A longitudinal section of the groove 311 is in a shape of any one selected from a U-shape with a flat bottom, a U-shape , a V-shape or an arc-shape. A shape of the side of the second sealing member 32 adjacent to the first sealing member 31 fits with a shape of the inner surface of the groove 311, and a part of the side of the second sealing member 32 adjacent to the first sealing member 31 extends into the groove 311, so as to improve a contact area between the first sealing member 31 and the second sealing member 32. In addition, the connecting strength between the first sealing member 31 and the second sealing member 32 is further improved by method of sticking. In some embodiments, a longitudinal section of the groove 311 can be in other shapes, as long as the groove 311 can play a same role.

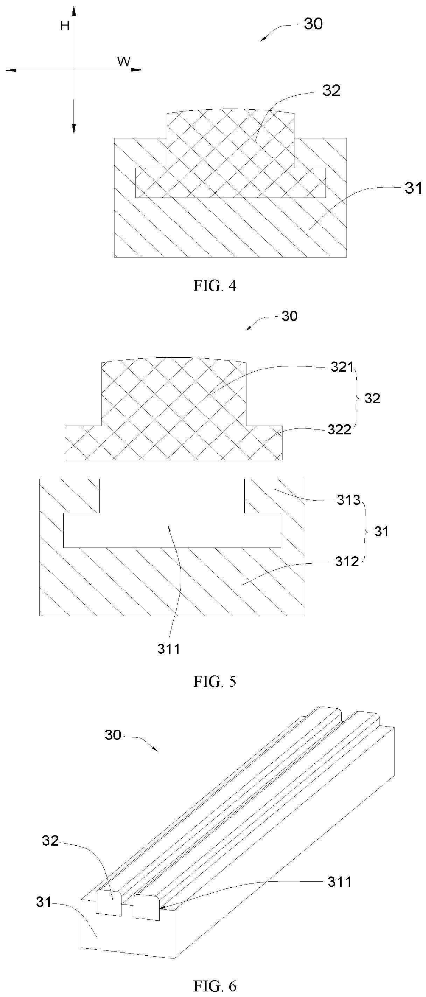

In some embodiments, referring to FIG. 4, the first sealing member 31 is latched to the second sealing member 32. The first sealing member 31 is connected to the second sealing member 32 by providing the shape of the first sealing member 31 fitting with the shape of the second sealing member 32.

Specifically, referring to FIG. 4 and FIG. 5, the first sealing member 31 includes a supporting portion 312 and a restricting protrusion 313, the restricting protrusion 313 is located at a side of the supporting portion 312 adjacent to the inner surface of the valve chamber 11 and is connected to the supporting portion 312, and the groove 311 is defined by the supporting portion 312 and the restricting portion 313 surrounding. Since a part of the second sealing member 32 extends in the groove 311 and abuts against the restricting protrusion 313, the restricting protrusion 313 can restrict the second sealing member 32.

The groove 311 extends on the first sealing member 31 along a length of the first sealing member 31. When the second sealing member 32 is inserted from an end of the first sealing member 31, the restricting protrusion 313 can prevent the second sealing member 32 from moving away from the supporting portion 312 and prevent the second sealing member from separating from the groove 311. In addition, since the first sealing member is in interference fit with the second sealing member 32, the first sealing member 31 is further fixed to the second sealing member 32.

Furthermore, referring to FIG. 4 and FIG. 6, the second sealing member 32 includes a main body 321 and an abutting portion 322, and the abutting portion 322 is located on a side surface of the main body 321 and connected to the main body 321; when the second sealing member 32 extends into the groove 311, both sides of the abutting portion 322 is capable of abutting against the restricting protrusion 313 and the supporting portion 312, respectively. Thus, deviation of the second sealing member 32 can be avoided, so that the connecting strength between the first sealing member 31 and the second sealing member 32 can be improved.

Specifically, along a height direction of the second sealing member 32, a side of the main body 321 abuts against the first sealing member 31, and the other side of the main body 321 protrudes out from the groove 311 and abuts against the inner surface of the valve chamber 11. The number of the abutting portion 322 is two. Along a width direction of the second sealing member 32, the two abutting portion 322 are located on two side surfaces of the main body 321, restricted by the restricting protrusion 313 and fit with the restricting protrusion 313.

Furthermore, the abutting portion 322 is strip-shaped, and a length of the abutting portion 322 is equal to a length of the main body 321. Thus, a space in the groove 311 is completely occupied by the second sealing member 32, and the contacting area between the first sealing member 31 and the second sealing member 32 is further improved. **In** addition, the abutting portion 322 fits with the restricting protrusion 313 and is restricted by the restricting protrusion 313. Thus, deviation of the second sealing member 32 can be avoided, so that the connecting strength can be improved.

In some embodiments, the number of the abutting portion 322 is at least three. Along a width direction of the second sealing member 32, at least three abutting portions 322 are located at two sides of the main body 321, respectively. In addition, along a length direction of the second sealing member 32, the abutting portions 322 are spaced from each other on the main body 321. The abutting portion 322 fits with the restricting protrusion 313 and is restricted by the restricting protrusion 313. Thus, deviation of the second sealing member 32 can be avoided, so that the connecting strength can be improved.

It should be noted that a direction of the arrow *W* represents the width direction of the second sealing member 32, and a direction of the arrow *H* represents the height direction of the second sealing member 32.

In some embodiments, both the groove 311 and the second sealing member 32 are T-shaped. In this way, the groove 311 can prevent the second sealing member 32 from separating from the groove 311. In some embodiments, a shape of the first sealing member 31, a shape of the groove 311 and a shape of the second sealing member 32 can change according to actual requirements, as long as the first sealing member 31, the groove 311 and the second sealing member 32 can achieve the same effect.

Referring to FIG. 3 and FIG. 4, in some embodiments, the number of the groove 311 is one, and the number of the second sealing member 32 is corresponding to the number of the groove 311.

Referring to FIG. 6, in some embodiments, the number of the grooves 311 is at least two, the number of the second sealing member 32 is corresponding to the number of the grooves 311, and each of the grooves 311 is provided with one second sealing member 32 inside.

In the present embodiment, the number of the grooves 311 is two, and the number of the second sealing member 32 is two. The two second sealing member are connected to the first sealing member 31, respectively. By increasing the number of the second sealing members 32 and connecting the second sealing member 32 to the first sealing member 31 by method of sticking or attaching, the sealing performance of the four-way valve 100 is further improved. In some embodiments, the number of the grooves 311 can be three, four, or five, as long as the number of the second sealing member 32 is corresponding to the number of the grooves 311.

Referring to FIG. 1 and FIG. 2, the four-way valve 100 further includes an elastic member 40. The elastic member 40 is located at a side of the first sealing member 31 away from the second sealing member 32, one end of the elastic member 40 abuts against the valve core 20, and the other end of the elastic member 40 abuts against the first sealing member 31. In the four-way valve 100, the sealing assembly 30 is elastically fit with the inner surface of the valve chamber 11 via the elastic member 40. By elastic deformation of the elastic member 40, the sealing assembly 30 is pushed to abut against the inner surface of the valve chamber 11. Specifically, the elastic member 40 pushes the first sealing member 31, so that the second sealing member 32 connected to the first sealing member 31 can partly protrude out from the axial mounting groove 201 and make the second sealing member 32 always abut against the inner surface of the valve chamber 11, and flexibly fill a gap between the valve core 20 and the inner surface of the valve chamber 11, so as to prevent the fluid from leaking, and prevent jamming between the valve core 20 and the valve body 10 caused by unduly tight fit between the sealing assembly and the inner surface of the valve body. In the present embodiment, the four-way valve 100 includes a plurality of elastic members 40, and the plurality of elastic members 40 spaced from each other along the axis of the valve core 20, so that many parts of the second sealing member 32 can be tightly fit with the inner surface of the valve chamber 11, thereby further improving the sealing performance of the four-way valve 100.

Furthermore, a side surface of the second sealing member 32 away from the first sealing member 31 is an arc-shaped surface. Specifically, the arc-shaped surface is a convex arc-shaped surface protruding towards the valve body 10. When the sealing assembly 30 is pressed by the elastic member 40, the second sealing member 32 can be tightly fit with the inner surface of the valve chamber 11. The side surface of the second sealing member 32 adjacent to the inner surface of the valve chamber 11 is an arc-shaped surface, which fits with the shape of the inner surface of the valve chamber 11, so that harming to the inner surface of the valve chamber 11 caused by the second sealing member 32 can be avoided, and the sealing performance of the four-way valve 100 can be improved.

In some embodiments, the axial mounting groove 201 is disposed on the inner surface of the valve body 10. In some embodiments, the inner surface of the valve body 10 is provided with an axial mounting groove 201 extending along the axis of the valve core. At least a part of the sealing assembly is disposed in the axial mounting groove 201. The second sealing member 32 is located at a side of the first sealing member 31 adjacent to the valve core 20, and connected to the first sealing member 31. A side of the second sealing member 32 away from the first sealing member 31 abuts against the valve core 20, fits with the valve core 20 to form a sealing fit.

Similarly, in the four-way valve 100 of the present embodiment, the sealing performance of the four-way valve 100 is improved by providing the sealing assembly 30. Specifically, in one aspect, the first sealing member 31 made of a metal material can ensure that a rigid fit is formed between the sealing assembly 30 and the valve core 20, so as to facilitate elastic deformation of the sealing assembly 30, and situation of jamming will hardly occur. In another aspect, the second sealing member 32 made of a non-metal material abuts against the valve core 20, so as to avoid situations in the related art, such as a metal sealing member scratches the valve core 20, causing leakage of the fluid, can be avoided. Thus the sealing performance and abrasion resistance of the four-way valve 100 is improved, and a service life of the four-way valve 100 is prolonged.

The side of the first sealing member 31 adjacent to the valve core 20 is provided with a groove 311, a part of the second sealing member 32 extends into the groove 311 and is connected to the first sealing member 31, and a side of the second sealing member 32 away from the groove 311 abuts against the valve core 20. By providing the groove 311, a connection area between the first sealing member 31 and the second sealing member 32 is improved, so that a connecting strength between the first sealing member 31 and the second sealing member 32 is improved. In addition, a part of the second sealing member 32 is located outside the groove 311 and abuts against the valve core 20, so that problem of abrasion caused by long-term abutting between the first sealing member 31 and valve core 20 can be avoided.

The four-way valve 100 further includes an elastic member 40. The elastic member 40 is located at a side of the first sealing member 31 away from the second sealing member 32, one end of the elastic member 40 abuts against the valve body 10, and the other end of the elastic member 40 abuts against the first sealing member 31. In the four-way valve 100, the sealing assembly 30 is elastically fit with the valve core 20 via the elastic member 40. By elastic deformation of the elastic member 40, the sealing assembly 30 is pushed to abut against the valve core 20. Specifically, the elastic member 40 pushes the first sealing member 31, so that the second sealing member 32 connected to the first sealing member 31 can partly protrude out from the axial mounting groove 201 and make the second sealing member 32 always abut against the valve core 20, and flexibly fill a gap between the valve core 20 and the inner surface of the valve chamber 11, so as to prevent the fluid from leaking, and prevent jamming between the valve core 20 and the valve body 10 caused by unduly tight fit between the sealing assembly 30 and the valve core 20 In the present embodiment, the four-way valve 100 includes a plurality of elastic members 40, and the plurality of elastic members 40 spaced from each other along the axis of the valve body 10, so that many parts of the second sealing member 32 can be tightly fit with the valve core 20, thereby further improving the sealing performance of the four-way valve 100.

Furthermore, a side surface of the second sealing member 32 away from the first sealing member 31 is an arc-shaped surface. Specifically, the arc-shaped surface is a concave arc-shaped surface protruding towards the valve core 20. When the sealing assembly 30 is pressed by the elastic member 40, the second sealing member 32 can be tightly fit with the valve core 20. The side surface of the second sealing member 32 adjacent to the valve core 20 is an arc-shaped surface, which fits with the shape of the outer surface of the valve core 20, so that harming to valve core 20 caused by the second sealing member 32 can be avoided, and the sealing performance of the four-way valve 100 can be improved.

In some embodiments, a width of the second sealing member 32 is equal to a width of the first sealing member 31, that is, the second sealing member 32 completely fits with the first sealing member 31. Thus, it is not necessary to process a groove 311 on the first sealing member 31, processing of the first sealing member 31 is simple and the contact area between the first sealing member 31 and the second sealing member 32, and thereby further improving stability of connection between the first sealing member 31 and the second sealing member 32.

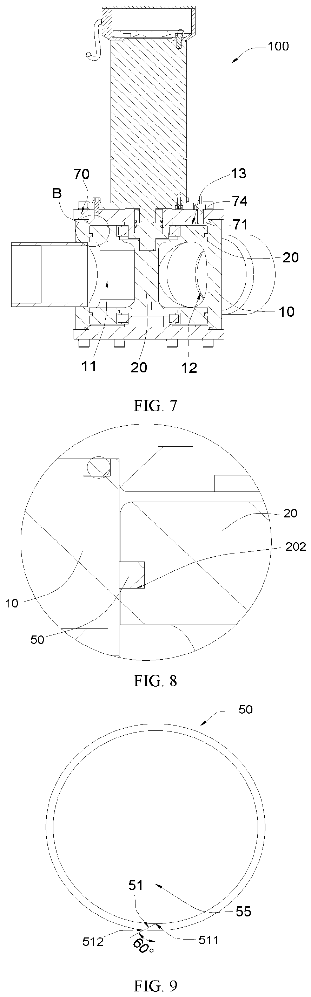

Referring to FIG. 7 and FIG. 7, the four-way valve 100 further includes a circumferential sealing member 50. The circumferential sealing member 50 is disposed between the valve core 20 and the valve body 10, and the circumferential sealing member 50 is configured for sealing a slit between the valve core 20 and the valve body 10. The circumferential sealing member 50 is made of plastic, and the circumferential sealing member 50 is provided with an incision. The incision 51 extends through the circumferential sealing member 50 along an axis of the circumferential sealing member 50. In the present embodiment, a material of the circumferential sealing member 50 is not limited, and the material of the circumferential sealing member 50 can be Teflon and the like.

In the present embodiment, by providing a circumferential sealing member 50 made of plastic, the circumferential sealing member 50 has relative good abrasive resistance, so that the four-way valve 100 is suitable to be used in an oil-free environment. The circumference sealing member 50 made of plastic has good plasticity but poor elasticity. Thus, in a processing process, the circumference sealing member 50 made of plastic cannot be stretched and sleeved on the periphery circumference of the valve core 20 as the circumference sealing member made of rubber in the related art. For the circumferential sealing member 50 of the present embodiment, in the process of processing the four-way valve 100, by providing the incision 51, the circumferential sealing member 50 can be sleeved on the outer circumference of the valve core 20, or the circumferential sealing member 50 can be inserted in the periphery circumferential wall of the valve body 10. Compared to the circumferential sealing member made of rubber in related art, the circumferential sealing member 50 in the present embodiment has better abrasive resistance, so that the four-way valve 100 is suitable to be used in the oil-free environment, thus improving an adaptability of the four-way valve 100. In addition, in the present embodiment, the four-way valve 100 is simple in structure and convenient to assemble.

Referring to FIG. 9, a projection of the incision 51 along the axis of the circumferential sealing member 50 includes a first endpoint 511 and a second endpoint 512. The first endpoint 511 is located on an inner circumferential surface of the circumferential sealing member 50. The circumferential sealing member 50 is provided with a reference radial line 55. The first endpoint 511 is located on the reference radial line 55. An angle between a line defined by the first endpoint 511 and the second endpoint 512 and the reference radial line 55 is in a range of 30° to 75°. In this way, the circumferential sealing member 50 has two cutting sections at the incision 51. In the present embodiment, after the circumferential sealing member 50 is sleeved on the valve core 20, two cutting sections of the incision 50 are attached to each other. In this way, a contact area between the two cutting sections is increased as much as possible, so as to ensure the stability of the circumferential sealing member 50 and ensure the sealing performance of the circumferential sealing member 50. The angle between a line defined by the first endpoint 511 and the second endpoint 512 and the reference radial line 55 can be 30°, 45° or 75°. In the present embodiment, the angle between a line defined by the first endpoint 511 and the second endpoint 512 and the reference radial line 55 is 60°.

Referring to FIG. 7 and FIG. 8, the outer circumferential surface of the valve core 20 is provided with a circumferential mounting groove 202. The circumferential mounting groove 202 is ring-shaped, the circumferential mounting groove 202 and the valve core 20 are coaxial, the circumferential sealing member 50 is disposed in the circumferential mounting groove 202, and an outer circumferential surface of the circumferential sealing member 50 abuts against the inner surface of the valve body 10. In this way, the circumferential mounting groove 202 can play a role of restricting the circumferential sealing member 50, so as to ensure the stability of the circumferential sealing member 50, and thereby ensuring the sealing performance of the circumferential sealing member 50.

In some embodiments, a part of the circumferential sealing member 50 located in the circumferential mounting groove 202 is in clearance fit with the circumferential mounting groove 202. In this way, the circumferential mounting groove 202 can provide a deformation space for the circumferential sealing member 50 to ensure smooth rotation of the valve core 20. In addition, convenience for assembling the circumferential sealing member 50 can be ensured.

Specifically, a section of the circumferential mounting groove 202 along the axis of the circumferential sealing member 50 is rectangle-shaped, and a section of the part of the circumferential sealing member 50 located in the circumferential mounting groove 202 along the axis of the circumferential sealing member 50 is rectangle-shaped. In this way, a contact area between the circumferential sealing member 50 and the groove surface of the circumferential mounting groove 202 is increased, and situation that the circumferential sealing member 50 rotates in the circumferential mounting groove 202 is reduced, so as to ensure the stability of the circumferential sealing member 50, and thereby ensuring the sealing performance of the circumferential sealing member 50. In addition, the abrasion to the circumferential sealing member 50 can be reduced, and the sealing performance of the circumferential sealing member 50 can be ensured. The section of the circumferential sealing member 50 along the axis of the circumferential sealing member 50 can be rectangle-shaped. In this way, the contact area between the outer circumferential surface of the circumferential sealing member 50 and the inner surface of the valve body 10 can be increased, and the sealing performance of the circumferential sealing member 50 can be ensured.

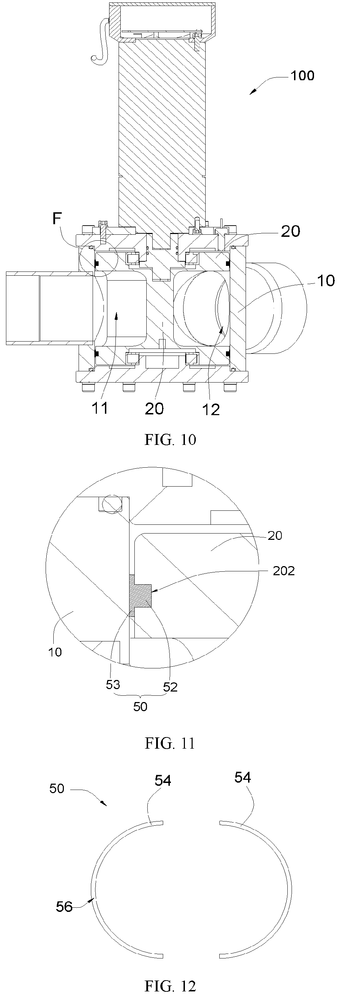

Referring to FIG. 10 and FIG. 11, the circumferential sealing member 50 includes a first sealing portion 52 and a second sealing portion 53 connected to the first sealing portion 52, the second sealing portion 53 is surrounded outside the first sealing portion 52, the first sealing portion 52 is disposed in the circumferential mounting groove 202, a side of the second sealing portion 53 away from the first sealing portion 52 abuts against the inner surface of the valve body 10, a size of the second sealing portion 53 along the axis of the circumferential sealing member 50 is greater than a size of the first sealing portion 52 along the axis of the circumferential sealing member 50. In the present embodiment, two ends of the section of the second sealing portion 53 along the axis of the circumferential sealing member 50 protrude out from the two ends of the section of the first sealing portion 52 along the axis of the circumferential sealing member 50. In this way, processing of the circumferential sealing member 50 is convenient.

Furthermore, a section of the first sealing portion 52 along the axis of the circumferential sealing member 50 is rectangle-shaped, and a section of the second sealing portion 53 along the axis of the circumferential sealing member 50 is rectangle-shaped. In this way, the contact area between the outer circumferential surface of the circumferential sealing member 50 and the inner surface of the valve body 10 is further increased, and the sealing performance of the circumferential sealing member 50 is ensured. Thus, processing of the circumferential sealing member 50 is convenient.

The circumferential sealing member 50 includes a plurality of incisions 51, the circumferential sealing member 50 is divided into a plurality of sealing sections 54 by the plurality of incisions 51, and the plurality of sealing sections 54 are disposed end to end. The number of the incisions 51 is not limited in the present embodiment. The circumferential sealing member 50 can include two incisions 51, three incisions 51 or four incisions 51. Referring to FIG. 12, the circumferential sealing member 50 includes two incisions 51. At this time, the number of the sealing section 54 is two. In the processing process, the two sealing sections 54 are attached in the circumferential mounting groove 202, and adjacent incision cuttings of the two sealing sections 54 abut against each other. In this way, assembling of the circumferential sealing member 50 is more convenient.

Specifically, adjacent ends of adjacent two of the plurality of sealing sections 54 abut against each other. The plurality of sealing sections 54 form a ring-shaped structure 56. A perimeter of an inner circumferential surface of the ring-shape structure 56 is equal to a minimum perimeter of the circumferential mounting groove 202, and a perimeter of an outer circumferential surface of the ring-shape structure 56 is equal to a perimeter of an inner circumferential surface of the valve body 10. In this way, the sealing performance of the circumferential sealing member 50 can be ensured, and the assembling of the circumferential sealing member 50 is convenient.

In some embodiments, the circumferential sealing member 50 can be disposed on the inner surface of the valve body 10. Specifically, the circumferential mounting groove 202 can be provided on the inner surface of the valve body 10, the circumferential sealing member 50 can be disposed in the circumferential mounting groove 202, and the side of the circumferential sealing member 50 away from the valve body 10 fits with the valve core 20 and is in sealing connection with the valve core 20.

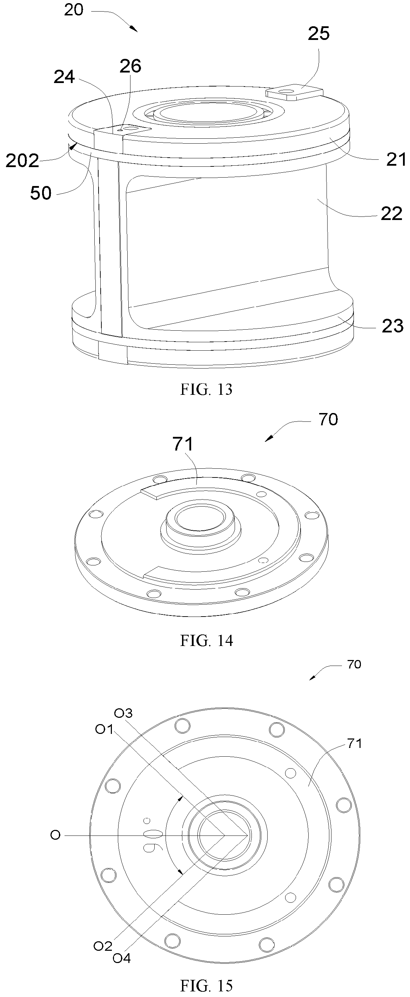

Referring to FIG. 7 and FIG. 13, the four-way valve 100 includes a plurality of circumferential sealing members 50, and the plurality of circumferential sealing members 50 are spaced from each other along the axis of the valve core 20. In the present embodiment, the valve core 20 includes a first end plate 21, a connecting plate 22 and a second end plate 23, which are disposed along the axis of the valve core 20. The first end plate 21 and the second end plate 23 are coaxially disposed. A diameter of the first end plate 21 is equal to a diameter of the second end plate 23. The connecting plate 22 has a length direction and a width direction. The length direction of the connecting plate 22 is parallel to the axis of the valve body 10, and the width direction of the connecting plate 22 is parallel to the radial direction of the first end plate 22. The width of the connecting plate 22 is equal to the diameter of the first end plate 21. The valve chamber 11 is divided into two independent chambers by the connecting plate 22, and the valve core 20 can adjust the communication states between the plurality of communicating ports 12 via the connecting plate 22. Two circumferential sealing members 50 are disposed along the axis of the valve core 20, and the two circumferential sealing members 50 are spaced from each other. One of the two circumferential sealing members 50 is disposed on the outer circumferential surface of the first end plate 21, the other of the two circumferential sealing members 50 is disposed on the outer circumferential surface of the second end plate 23. In this way, the sealing performance of the circumferential sealing member 50 can be further ensured.

Referring to FIG. 7 to FIG. 18, the four-way valve 100 further includes an end cap 70 and a driving assembly 60. The end cap 70 is disposed at the accommodating port 13 and is connected to the valve body 10. The driving assembly 60 is disposed on the end cap 70. The driving assembly 60 includes a controlling unit and a driving unit electrically connected to the controlling unit. The driving unit is connected to the valve core 20 and is capable of driving the valve core 20 to rotate.

Furthermore, in some embodiments, referring to FIG. 7 to FIG. 18, the four-way valve 100 further includes a sensing member 74, a responding member 26, a first restricting member 71 and a second restricting member 25. The sensing member 74 is disposed on the end cap 70 and is electrically connected to the driving assembly 60 via a signal wire, the responding member 26 is disposed on the valve core 20, and the responding member 26 matches with the sensing member 74 via inductive coupling. The first restricting member 71 is disposed on the end cap 70. The second restricting member 25 is disposed on the valve core 20, the second restricting member 25 is configured for fitting with the first restricting member 71 and restricting the first restricting member 71, the second restricting member 25 has a restricting state and a separating state relative to the first restricting member 71. The communication state includes a refrigerating state and a heating state. When the four-way valve 100 is switched to one of the refrigerating state and the heating state, the responding member 26 matches with the sensing member 74 via the inductive coupling, and the second restricting member 25 fits with the first restricting member 71 and restricts the first restricting member 71.

In the present embodiment, by providing the first restricting member 71 and the second restricting member 25, the valve core 20 can control the plurality of communicating ports 12 more accurately. Specifically, when the four-way valve 100 is switched to the refrigerating state or the heating state, the responding member 26 is driven by the valve core 20 to an induction position of the sensing member 74. At this time, a position signal of the responding member 26 is transmitted to the controlling unit of the driving assembly 60 via the signal wire, the driving unit is controlled by the controlling unit to stop driving the valve core 20. Although the driving assembly 60 has rotation inertia, over rotation of the valve core 20 can be effectively avoided via restricting between the first restricting member 71 and the second restricting member 25. Thus, the responding member 26 can be ensured to be located in a sensing area of the sensing member 74, communication positions of the plurality of communicating port 12 can be accurately controlled, thereby position accurate of the valve core 20 in the process of switching the four-way valve 100 between the refrigerating state and the heating state can be ensured. Compared to the related art, in the present embodiment, the sensing member 74 matches with responding member 26 via the inductive coupling, and the second restricting member 25 fits with the and first restricting member 71 and restricts the first restricting member 71 at the same time, so as to avoid over rotation of the valve core 20, thereby ensuring a switching accurate of the four-way valve 100 between the refrigerating state and the heating state. In addition, the four-way valve 100 in the present embodiment is simple in structure.

Specifically, the end cap 70 has a first end and a second end opposite to each other. The first restricting member 71 is provided on an end surface of the first end of the end cap70, the second restricting member 25 is provided on the end surface of the valve core 20 adjacent to the end cap70. That is, in the present embodiment, the first restricting member 71 is provided on an inner end surface of the end cap 70. In this way, it is convenient to assemble the components.

The first restricting member 71 can be a restricting groove. When the first restricting member 71 is a restricting groove, the restricting groove extends along the same direction as the moving route of the second restricting member 25. The limiting groove is provided with two side walls opposite to each other along the circumference of the first restricting member 71. The second restricting member is disposed in the restricting groove and movable in the restricting groove. When the four-way valve 100 is in the refrigerating state, the second restricting member 25 abuts against one of the two side walls of the restricting groove. When the four-way valve 100 is in the heating state, the second restricting member 25 abuts against the other of the two side walls of the restricting groove.

Referring to FIG. 7 to FIG. 13, the first restricting member 71 can be a restricting protrusion, and the first restricting member 71 and the end cap70 are an integral structure. The first restricting member 71 is provided with two side walls opposite to each other along the circumference of the first restricting member 71. When the four-way valve 100 is in the refrigerating state, the second restricting member 25 abuts against one of the two side walls of the first restricting member 71. When the four-way valve 100 is in the heating state, the second restricting member 25 abuts against the other of the two side walls of first restricting member 71. In this way, the connecting strength between the first restricting member 71 and the end cap70 can be guaranteed, and the restricting effect between the first restricting member 71 and the second restricting member 23 can be guaranteed.

The first restricting member 71 can include two independent restricting protrusions. The two restricting protrusions spaced from each other along a circumference of the end cap 70. A side of the restricting protrusion adjacent to the second restricting member 25 defines a side surface being configured for abutting against the second restricting member 25 and fitting with the second restricting member 25.

Referring to FIG. 7, FIG. 13 and FIG. 16, an end surface of the second restricting member 25 adjacent to the first end protrudes out from the end surface of the valve core 20 adjacent to the first end, and the second restricting member 25 is detachably connected to the valve core 20. In the present application, the shape of the second restricting member 25 is not limited. In the present embodiment, a section of the second restricting member 25 is quadrangle-shaped. In the present application, the method for connecting the second restricting member 25 to the valve core 20 is not limited. The second restricting member 25 can be connected to the valve core 20 by method of latching, clipping or welding, optionally, the second restricting member 25 and the valve core 20 can be an integral structure. In the present embodiment, the second restricting member 25 is connected to the valve core 20 by screwing. In this way, it is convenient to assemble the valve core 20 to the second restricting member 25.

Furthermore, a restricting structure is disposed between the second restricting member 25 and the valve core 20. The restricting structure can restrict the location of the second restricting member 25 on the valve core 20. By providing the restricting structure, the second restricting member 25 can be connected to the valve core 20 more accurately, and the connecting strength between the second restricting member 25 and the valve core 20 can be guaranteed.

Specifically, an end surface of the valve core 20 adjacent to the first end is provided with a first restricting groove 203, and the second restricting member 25 is disposed in the first restricting groove 203. In this way, the valve core 20 is simple in structure and convenient to process, and it is convenient to assemble the second restricting member 25.

Furthermore, the second restructuring member 25 is a restricting block. The restricting block includes an inner circumferential surface and an outer circumferential surface opposite to each other along a radial direction of the valve core 20. The second restricting member, i.e., the restricting block, is disposed on a periphery edge of the end surface of the valve core 20, and the outer circumferential surface of the second restricting member 25 is level with an outer circumferential surface of the valve core 20. Specifically, the side of the first restricting member 203 away from the centre of the valve core 20 extends to the circumferential surface of the valve core 20. The top of the restricting block is provided with a counterbore. The counterbore extends to a lower end surface of the restricting block. A screw bolt extends through the counterbore and is threadedly connected to a bottom wall of the first restricting groove 203. In this way, interference to rotation of the valve core 20 caused by the screw bolt can be avoided, and a size of the four-way valve along the axis of the four-way valve 100 can be miniaturized.

Referring to FIG. 7, FIG. 13 and FIG. 16, the four-way valve 100 can further include a non-magnetic conductive portion 24 and a fastening screw bolt. The end surface of the end of the valve core 20 adjacent to the end cap 70 is provided with a second restricting groove 204. A side of the second restricting groove 204 away from the centre of the valve core 20 extends to the circumferential surface of the valve core 20. The non-magnetic conductive portion 24 is disposed in the second restricting groove 204. The top surface of the non-magnetic conductive portion 24 is level with the top surface of the valve core 20. The top of the non-magnetic conductive portion 24 is provided with a counter bore. The counter bore extends to the bottom of the non-magnetic conductive portion 24. The fastening screw bolt extends through the counter bore and is threadedly connected to the bottom of the second restricting groove 204. The top of the non-magnetic conductive portion 24 is provided with a second mounting groove. The responding member 26 is adhered in the second mounting groove.

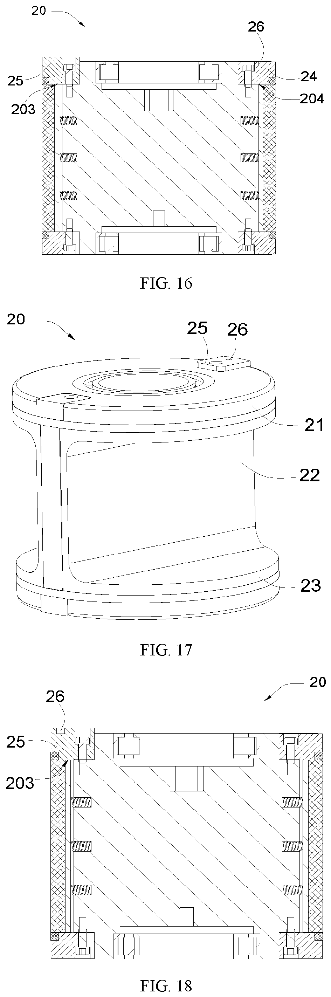

Referring to FIG. 17 and FIG. 18, in the present embodiment, the responding member 26 is disposed on the second restricting member 25. When the responding member 26 is disposed on the second restricting member 25, the top of the second restricting member 25 is provided with a first mounting groove. The responding member 26 is adhered in the first mounting groove. In this way, it is more convenient to assemble the responding member 26.

Furthermore, the second restricting member 25 is made of non-magnetic conductive materials. The responding member 26 is made of a magnetic conductive material. In the present invention, the specific material of the second restricting member 25 is not limited. In the present embodiment, the second restricting member 25 is made of copper. In this way, accuracy of induction between the sensing member 74 and the responding member 26 can be guaranteed, over rotation of the valve core 20 can be reduced, and accuracy of switching of the four-way valve 100 between the refrigerating state and the heating state can be improved.

Referring to FIG. 7 and FIG. 14, the sensing member 74 includes a refrigerating sensing member and a heating sensing member. The refrigerating sensing member and the heating sensing member spaced from each other along the circumference of the valve core 20. The refrigerating sensing member and the heating sensing member match with the responding member 26 via inductive coupling, respectively. When the responding member 26 is rotated to a sensing position of the refrigerating sensing member, the four-way valve 100 is in the refrigerating state. When responding member 26 is rotated to a sensing position of the heating sensing member, the four-way valve 100 is in the heating state. In the present embodiment, locations of the refrigerating sensing member and the heating sensing member are not limited. The refrigerating sensing member and the heating sensing member can be disposed in the valve body 10. In the present embodiment, both the refrigerating sensing member and the heating sensing member are disposed on the end cap70. In this way, it is convenient to assemble the four-way valve 100.

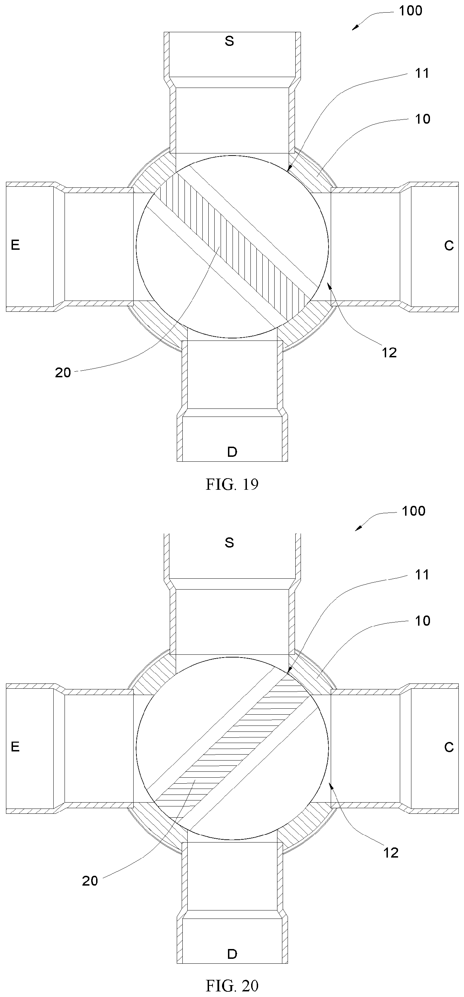

Referring to FIG. 7 to FIG. 13, FIG. 19 and FIG. 20, the first end plate 21 is disposed near the driving assembly 60. Both the responding member 26 and the second restricting member 25 are disposed on the end surface of the first end plate 21 adjacent to the driving assembly 60. A centre of the responding member26 is located on a centre line of the second restricting member 25 along the radial direction of the valve core 20. The connecting plate 22 has a central plane extending along the axis of the valve core 20. The centre lien of the second restricting member 25 is located on the central plane of the connecting plate 22. In the present embodiment, when the four-way valve 100 is in the refrigerating state, a projection of the central plane of the connecting plate 22 on the end cap 70 along the axis of the valve core 20 is defined as *O*1. When the four-way valve 100 is in the heating state, the projection of the central plane of the connecting plate on the end cap 70 along the axis of the valve core 20 is defined as *O*2. An angle between the projection *O*1 of the connecting plate 22 on the end cap 70 and the projection *O*2 of the connecting plate 22 on the end cap 70 is defined as α. The angle α between the projection *O*1 of the connecting plate 22 on the end cap 70 and the projection *O*2 of the connecting plate 22 on the end cap 70 can be designed according to actual needs. In the present embodiment, the angle α between the projection *O*1 of the connecting plate 22 on the end cap 70 and the projection *O*2 of the connecting plate 22 on the end cap 70 is 90°. In addition, in the present embodiment, the communicating port 12 can be defined as a *D* port, a *C* port, an *S* port and an *E* port. In the refrigerating state, the *E* port is in communication with the *D* port, and the *C* port is in communication with the *S* port. In the heating state, the *D* port is in communication with the *C* port, and the *E* port is in communication with the *S* port. In addition, a first induction point of a projection of a moving path of the responding member 26 along the axis of the valve core 20 is located between the *E* port and the *S* port, and a second induction point of the projection of the moving path of the responding member 26 along the axis of the valve core 20 is located between the *E* port and the *D* port. In the present embodiment, the first restricting member 71 has a first side wall and a second side wall opposite to each other disposed along the circumference of the first restricting member 71. Extension of the first side wall is parallel to the projection *O*3, and extension of the second side wall is parallel to the projection *O*4. An angle between the projection *O*3 and the projection *O*4 is 90°. The end cap 70 is provided with a reference radial line *O*. The reference line *O* is parallel to the radial direction of the end cap 70. The projection *O*3 and the projection *O*4 are symmetrically disposed relative to the reference line *O*, and the projection *O*1 and the projection *O*2 are symmetrically disposed relative to the reference line *O* and located between the projection *O*3 and the projection *O*4. An intersection point of the projection *O*3 and the projection *O*4 and a centre of the end cap 70 are located and spaced from each other on the radial direction of the end cap 70. The second restricting member 25 has a symmetrical structure. A size of the second restricting member 25 along the circumference of the end cap 70 is two times the distance between the projection *O*3 and the projection *O*1 along the circumference of the end cap 70. That is, when the four-way valve 100 is in the refrigerating state, a projection of a centre line of the second restricting member 25 along the axis of the valve core 20 is parallel to the projection *O*1, and a side wall of the second restricting member 25 abuts against and fits with the first side wall of the first restricting member 71; and when the four-way valve 100 is in the heating state, a projection of the centre line of the second restricting member 25 along the axis of the valve core 20 is parallel to the projection *O*2, and the other side wall of the second restricting member 25 abuts against and fits with the second side wall of the first restricting member 71. In this way, a switching angle for switching the four-way valve 100 from the refrigerating state to the heating state can be guaranteed to be 90°, so as to guarantee the switching accuracy between the refrigerating state and the heating state.

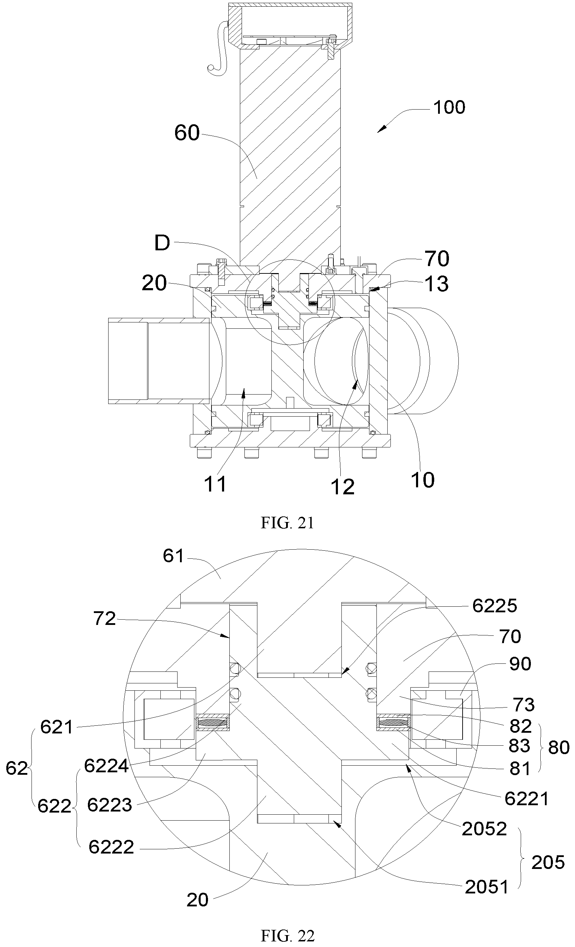

Referring to FIG. 21 and FIG. 22, the end cap 70 includes a through hole 72. The driving assembly 60 is disposed on the end cap 70. The driving assembly 60 includes an actuating shaft 62. The actuating shaft 62 extends through the through hole 72 and is connected to the valve core 20, and the actuating shaft 62 is capable of driving the valve core 20, so as to allow the valve core 20 to rotate. The actuating shaft 62 includes an axial restricting portion 6221, and the axial restricting portion 6221 is located in the valve chamber 11. The four-way valve 100 further includes a first bearing 80. The first bearing 80 is disposed around a periphery circumference of the actuating shaft 62, and located between the axial restricting portion 6221 and the end cap 70, so as to reduce abrasion between the axial restricting portion 6221 and the end cap 70.

In the technical solution of the present embodiment, by providing a first bearing 80 between the axial restricting portion 6221 and the end cap 70, the abrasion between the axial restricting portion 6221 and the end cap 70 can be reduced, thereby reducing the rotational torque of the actuating shaft 62 and guarantee operation of the four-way valve 100. Specifically, when the four-way valve 100 is in operation, the actuating shaft 62 of the driving assembly 60 drives the valve core 20 to rotate. When the actuating shaft 62 rotates, the end of the first bearing 80 being connected to the axial restricting portion 6221 simultaneously rotates with the actuating shaft 62, and the end of the first bearing being connected to the end cap 70 kept still. In this way, abrasion between the end cap 70 and the axial restricting portion 6221 can be avoided. Compared to the technical solution in related art that the axial restricting portion is in contact with the end cap, in the present application, the situation that rotation torque of the actuating shaft 62 is reduced caused by abrasion between the end cap 70 and the axial restricting portion 6221 can be avoided, and the operation of the four-way valve 100 can be guaranteed. In addition, in the present embodiment, the four-way valve 100 is simple in structure and convenient to assemble.

Specifically, the first bearing 80 includes a first rotating portion 81, a rolling member 83 and a second rotating portion 82. The first rotating portion 81 is disposed around the periphery circumference of the actuating shaft 62 and is connected to the axial restricting portion 6221. The first rotating portion 81 and the actuating shaft 62 rotates synchronously, the second rotating portion 82 is disposed around the periphery circumference of the actuating shaft 62 and is connected to an inner end surface of the end cap 70, and the rolling member 83 is disposed between the first rotating portion 81 and the second rotating portion 62, so as to allow the first rotating portion 81 to rotate independently relative to the second rotating portion 82. In this way, direct contact between the first rotating portion 81 and the second rotating portion 82 can be avoided. Besides, friction between the first rotating portion 81 and the rolling member 83 is rolling friction, and friction between the second rotating portion 82 and the rolling member 83 is rolling friction. In this way, the first bearing 80 can operate smoothly, and the actuating shaft 62 can rotate smoothly.

Furthermore, the rolling member 83 includes a rolling portion and a fixed portion. The first rotating portion 81, the fixed portion and the second rotating portion 82 are successively disposed along the axis of the valve core 20. The fixed portion is disposed around the periphery circumference of the actuating shaft 62. The rolling portion includes a plurality of rolling balls. A plurality of mounting holes are disposed circlewise on the fixed portion. The plurality of mounting holes extend through the fixed portion along the axis of the valve core 20. Each of the plurality of mounting holes is provided with one rolling ball. The rolling ball abuts against and fit with the first rotating portion 81, and abuts against and fit with the second rotating portion 82, respectively. When the four-way valve 100 is in operation, the valve core 20 has a tendency to move towards the end cap 70. Thus, both the actuating shaft 62 and the first rotating portion 81 have the tendency to move towards the end cap 70. By providing the plurality of rolling balls, force transmission between the first rotating portion 81 and the second rotating portion 82 can be more evenly, so that a service life of the first bearing 80 can be ensured. At the same time, an axiality between the actuating shaft 62, the first bearing 80 and the valve body 10 can be guaranteed, thereby ensuring smooth rotation of the actuating shaft 62.

Furthermore, a side of the first rotating portion 81 adjacent to the second rotating portion 82 is provided with a first circular-shaped guiding groove, and the side of the second rotating portion 82 adjacent to the first rotating portion 81 is provided with a second circular-shaped guiding groove. The plurality of rolling balls are disposed in the first circular-shaped guiding groove and the second circular-shaped guiding groove, and capable of moving in the first circular-shaped guiding groove and the second circular-shaped guiding groove. In this way, the first circular-shaped guiding groove and the second circular-shaped guiding groove can guide and restrict the movement of the plurality of rolling balls, so as to ensure that the plurality of rolling balls move smoothly in the first rotating portion 81 and the second rotating portion 82, and ensure that the second rotating portion 82 rotate smoothly along with rotation of the axial restricting portion 6221.

Specifically, the first bearing 80 is a plane bearing. The first bearing 80 is provided with a first gasket and a second gasket opposite to each other along the axis of the valve core 20. The first gasket is regarded as the first rotating portion 81 and the second gasket is regarded as the second rotating portion 82. In the present embodiment, both the first gasket and the second gasket are in circular-shaped structures 56. In addition, an outer size of the first gasket is equal to an outer size of the second gasket, and an inner size of the first gasket is equal to an inner size of the second gasket. The first bearing 80 is in clearance fit with the actuating shaft 62. In this way, the first bearing 80 is capable of guiding and restricting the rotation of the actuating shaft 62, and ensuring smooth rotation of the actuating shaft 62.

Referring to FIG. 21, the actuating shaft 62 includes a first section 6222, a second section 6223 and a third section 6224 connecting to each other along an axis of the actuating shaft 20, and the first section 6222, the second section 6223 and the third section 6224 form a step-shaped structure. A diameter of the second section 6223 is greater than a diameter of the first section 6222, and the diameter of the second section 6223 is greater than a diameter of the third section 6224. The second section 6223 is defined as the axial restricting portion 6221, and the first section 6222 is connected to the valve core 20 and capable of driving the valve core 20. In the present embodiment, an outer diameter of first bearing 80 is equal to a diameter of the axial restricting portion 6221. In this way, a contact area between the first rotating portion 81 and the axial restricting portion 6221 can be guaranteed, connecting stability between the first rotating portion 81 and the axial restricting portion 6221 can be ensured, and it is convenient to assemble the first bearing 80 and the actuating shaft 62. In addition, the size of the four-way valve 100 along the radial direction can be miniaturized.

Furthermore, an inner end surface of the end cap 70 is provided with a guiding protrusion 73. The guiding protrusion 73 is disposed around a periphery circumference of the actuating shaft 62, and the end surface of the guiding protrusion 73 is connected to the first bearing 82. By providing the guiding protrusion 73, the rotation of the actuating shaft 62 can be restricted and guided, smooth rotation of the actuating shaft 62 can be ensured, and smooth operation of the four-way valve 100 can be guaranteed. In addition, in the present embodiment, the outer diameter of the guiding protrusion 73 is equal to the outer diameter of the first bearing 80. **In** this way, contact area between the second rotating portion 82 and the guiding protrusion 73 can be guaranteed, and connecting stability between the second rotating portion 82 and the guiding protrusion 73 can be ensured, and size of the four-way valve 100 along the radial direction can be miniaturized.

Specifically, an end surface of an end of the valve core 20 adjacent to the end cap 70 is provided with an assembling groove 205. The actuating shaft 62 extends in the assembling groove 205 and is connected to the valve core 20, and the actuating shaft 62 is capable of driving the valve core 20. The guiding protrusion 73 extends in the assembling groove 205. The four-way valve 100 further includes a second bearing 90, which includes an inner ring and an outer ring. The second bearing 90 is disposed in the assembling groove 205, an outer ring of the second bearing 90 is connected to a groove wall of the assembling groove 205, and an inner ring of the second bearing 90 is sleeved around the guiding protrusion 73 and a periphery circumference of the first bearing 80. In this way, the actuating shaft 62 and guiding protrusion 73 can extend in the assembling groove 205, and a size of the valve chamber 11 along the axis of the valve chamber 11 can be reduced, thereby the size of the four-way valve 100 along the axis of the four-way valve 100 can be miniaturized. In addition, when the valve core 20 rotates, the valve core 20 may shake. By providing the second bearing 90, direct contact between the side wall of the assembling groove 205 and the guiding protrusion 73 can be avoided, thereby ensuring smooth rotation of the valve core 20. In addition, in the present embodiment, both the guiding protrusion 73 and the first bearing 80 are in clearance fit with the second bearing 90. In this way, the size of the four-way valve 100 along the axis of the four-way valve 100 can be miniaturized, thereby ensuring compactedness of the four-way valve 100.

Specifically, the assembling groove includes a first groove section 2051 and a second groove section 2052 communicating along the axis of the valve core 20, and the first groove section 2051 and the second groove section 2052 define a step-shaped structure. The second groove section 2052 is disposed adjacent to the end cap 70. A sectional area of the second groove section 2052 is greater than a sectional area of the first groove section 2051. A section of the second groove section is round-shaped, and a section of the first groove section 2051 is polygon-shaped. The second bearing 90 is disposed in the second groove section 2052, a shape of a section of an end of the actuating shaft 62 fits with a shape of the section of the first groove section 2051, and the end of the actuating shaft 62 extends in the first groove section 2051 and is connected to the valve core 20, and the end of the actuating shaft 62 is capable of driving the valve core 20. In the present embodiment, the first section 6222 extends in the first groove section 2051, and the section of the first groove section 2051 is polygon-shaped. In the present embodiment, the section of the first groove section 2051 is rectangle-shaped, and the shape of the section of the first section 6222 fits with the shape of the section of the first groove section 2051, the first section 6222 fits with the first groove section 2051, and the first groove section 2051 is capable of restricting rotation of the first section 6222. In this way, it is convenient to connect the first section 6222 to the valve core 20.

Referring to FIG. 21 and FIG. 22, the driving assembly 60 includes a driving member 61 and a transmission shaft 622. The driving member 61 is disposed on the end cap 70, and the driving member 61 is provided with an output shaft 621. The transmission shaft 622 is detachably disposed on one end of the output shaft 621. The transmission shaft 622and the output shaft 621 are coaxially disposed. The transmission shaft 622 matches with the output shaft 621 to form the actuating shaft 62. The transmission shaft 622 extends through the through hole 72, being connected to the valve core 20 and is capable of driving the valve core 20. The transmission shaft 622 is provided with an axial restricting portion 6221. In the present embodiment, the end surface of the end of the transmission shaft 622 adjacent to the output shaft 621 is provided with a clamping slot 6225. A section of the clamping slot 6225 is polygon-shaped. In the present embodiment, the section of the clamping slot 6225 is rectangle-shaped, and the section of the output shaft 621 is rectangle-shaped. The output shaft 621 fits with the clamping slot 6225, and the clamping slot 6225 is capable of restricting rotation of the output shaft 621. In this way, it is convenient to assemble the four-way valve 100.

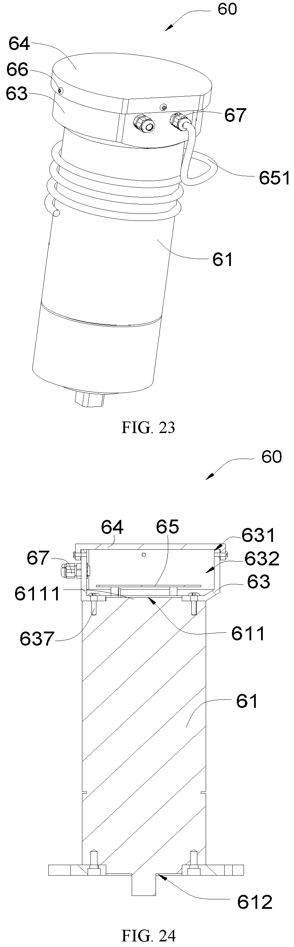

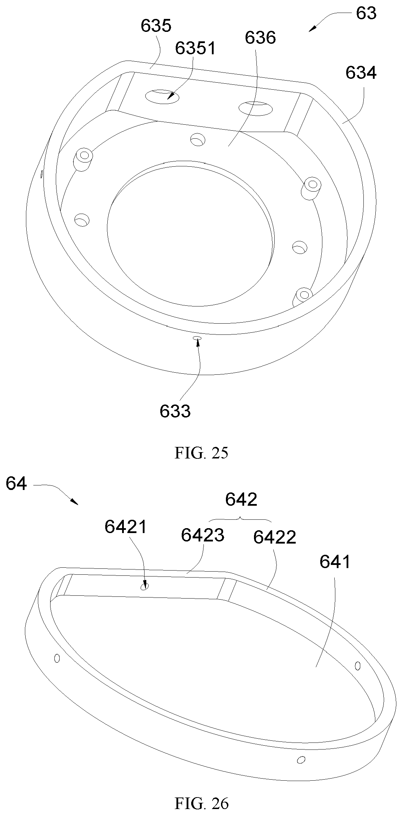

Referring to FIG. 23 to FIG. 26, the driving assembly 60 further includes a mounting box and a controller 65. The mounting box includes a box body 63 and a cap body 64. The box body 63 includes a mounting port 631 and an accommodating chamber 632 being in communication with each other. The mounting port 631 is disposed at one end of the box body 63, and the cap body 64 is covered at the mounting port 631. The cap body 64 includes a plate body 641 and a bending portion 642. The bending portion 642 is surrounded on the periphery circumference of the plate body 641, and the inner surface of the bending portion 642 fits with an outer surface of the box body 63. The controller 65 is disposed in the accommodating chamber 632. The driving member 61 includes a connecting end 611 and a driving end 612 opposite to each other. The driving end 612 is configured for connecting to the valve core 20 of the four-way valve 100 and driving the valve core 20 of the four-way valve 100. The connecting end 611 is connected to an end of the mounting box away from the mounting port 631, and the driving member 61 is electrically connected to the controller 65. In the present embodiment, the plate body 641 and the bending portion 642 are an integral structure. In the present embodiment, the cap body 64 is processed by method of stamping or precision casting.

Specifically, the driving end 612 is connected to the actuating shaft 62. The driving end 612 is connected to the valve core 20 via the actuating shaft 62 and capable of driving the valve core 20 via the actuating shaft 62.

In the present embodiment, since the cap body 64 includes the plate body 641 and the bending portion 642 being connected to each other, the problem that hydrops on the cap body 64 permeates into the mounting box and affects operation of the controller 65 can be avoided. Specifically, in the present embodiment, the bending portion 642 is disposed on the periphery circumference of the box body 63, abuts against the outer circumferential surface of the box body 63 and fits with the outer circumferential surface of the box body 63. When water accumulates on the cap body 64, the water may flow to the outer circumferential surface of the box body 63 along the bending portion 642 and keep away from the mounting portion 631 of the box body 63. Compared to the technical solution in the related art, in the present embodiment, situations that the water accumulates on at the mounting port 631 and permeates int the box body 63 can be reduced or avoided, thereby reducing or avoiding situations that the water damages the controller 65, and ensuring operation of the four-way valve 100. In addition, in the present embodiment, the driving assembly 60 is simple in structure.

Referring to FIG. 23, the driving assembly 60 further includes a first fastener 66. The box body 63 is detachably connected to the cap body 64 via the first fastener 66. By providing the first fastener 66, it is more convenient to assemble the box body 63 to the cap body 64.

Referring to FIG. 23 to FIG. 26, the bending portion 642 includes a first connecting hole 6421, a side wall of the box body 63 is provided with a second connecting hole 633, and the first fastener 66 successively extends through the first connecting hole 6421 and the second connecting hole 633, so as to allow the cap body 64 to be connected to the box body 63. The second connecting hole 633 can be a threaded through hole or a threaded blind hole. In the present embodiment, the second connecting hole 633 is a threaded blind hole. In this way, situation that the water permeates into the mounting box from the second connecting hole 633 can be further avoided, thereby further improving waterproofing effect. In addition, the top of the plate boxy 641 can be provided without an opening, thereby avoiding the situation that the water permeates into the mounting box from the opening at the top portion of the plate body 641, thereby further improving waterproofing effect of the mounting box. In addition, in the present embodiment, a plurality of first fasteners 66 can be disposed along the circumference of the bending portion 642 and spaced from each other along the circumference of the bending portion 642. The number of the first connecting hole 6421 and the number of the second connecting hole 633 can be multiple. Each of the plurality of first connecting holes 6421 and each of the plurality of second connecting holes 633 can be disposed corresponding to the first fastener 66. In this way, connecting stability between the cap body 64 and the box body 63 can be improved.

Furthermore, a restricting structure is disposed between the box body 63 and the cap body 64. The restricting structure is configured for restricting relative position between the box body 63 and the cap body 64 along the circumference of the driving assembly 60. In this way, the connecting hole 6421 can be disposed corresponding to the second connecting hole 633 conveniently, and it is convenient to assemble the mounting box.

In the present embodiment, bending portion 642 includes a first arc-shaped section 6422 and a first straight section 6423 successively connected to each other along a circumference of the driving assembly 60. The side wall of the box body 63 includes a second arc-shaped section 634 and a second straight section 635 successively connected to each other along the circumference of the driving assembly 60. The first arc-shaped section 6422 is disposed corresponding to the second arc-shaped section 634, and the first straight section 6423 is disposed corresponding to the second straight section 635, and the first straight section 6423 fits with the second straight section 635 to restrict a location of the box body 63 along a circumference of the cap body 64. In this way, the mounting box is simple in structure, it is convenient to process the bending portion 642 and the box body 63, and the space inside the mounting box can be guaranteed.

Furthermore, the second straight section 635 is provided with a wire hole 6351, through which a wire 651 of the controller 65 extends. By providing the wire hole 6351 on the second straight section 635, it is convenient to dispose the wire 651 of the controller 65, and it is convenient to process the wire hole 6351.

Furthermore, the driving assembly 60 further includes a waterproofing member 67, the waterproofing member 67 is disposed at the wire hole 6351, and the waterproofing member 67 is configured for sealing a gap between the wire 651 and the wire hole 6351. In this way, situation that water permeates into the mounting box from the through hole 72 can be reduced or avoided, thereby further improving the waterproofing effect of the mounting box. In the present embodiment, the waterproofing member 67 is a waterproof joint, the waterproof joint is threadedly connected to the mounting hole. In this way, it is convenient to assemble the waterproof joint.

Specifically, an end of the box body 63 away from the mounting port 631 is provided with a connecting member 636, the connecting member 636 is located in the accommodating chamber 632, and the connecting member 636 abuts against and fits with an end surface of the connecting end 61. The driving assembly 60 further includes a second fastener 637, and the second fastener 637 extends through the connecting member 636 and is connected to the connecting end 611. In this way, structure of the driving assembly 60 is compact, and it is convenient to connect the mounting box to the driving member 61.

Furthermore, the connecting member 636 is disposed in the accommodating chamber 632 in form of a ring, an end of the connecting end 611 is provided with a protruding portion 6111, the protruding portion 6111 extends in the connecting member 636, fits with the connecting member 636 and restricts the connecting member 636, so as to restrict a relative position between the box body 63 and the driving member 61. In this way, assembling accuracy of the mounting box and the driving member 61 can be guaranteed. In addition, in the present embodiment, a plurality of second fasteners 637 are disposed along the circumference of the connecting member 636 and spaced from each other along the circumference of the connecting member 636. In this way, the connecting stability of the connecting member 636 and the driving member 61 can be guaranteed. In addition, the connecting member 636 fits with the end surface of the connecting end 611, so as to further improve the waterproofing effect of the slit between the connecting member 636 and the end surface of the driving end 612.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. A four-way valve, **characterized by** comprising a valve body, a valve core and a sealing assembly; the valve body is provided with a valve chamber, the valve core is rotatably disposed in the valve chamber, an axial mounting groove extending along an axis of the valve core is disposed on an outer surface of the valve core, optionally, an axial mounting groove extending along an axis of the valve body is disposed on an inner surface of the valve body; at least a part of the sealing assembly is disposed in the axial mounting groove;
the sealing assembly comprises a first sealing member and a second sealing member,
the second sealing member is located at a side of the first sealing member adjacent to an inner surface of the valve chamber and is connected to the first sealing member, and a side of the second sealing member away from the first sealing member abuts against the inner surface of the valve chamber to form a sealing fit; optionally,
the second sealing member is located at a side of the first sealing member adjacent to the valve core and is connected to the first sealing member, and a side of the second sealing member away from the first sealing member is capable of abutting against the valve core to form a sealing fit;
wherein a material of the first sealing member is a metal material, and a material of the second sealing member is a non-metal material.

2. The four-way valve of claim 1, wherein the side of the first sealing member adjacent to the inner surface of the valve chamber is provided with a groove, a part of the second sealing member extends into the groove and is connected to the first sealing member, and a side of the second sealing member away from the groove abuts against the inner surface of the valve chamber; optionally,
the side of the first sealing member adjacent to the valve core is provided with a groove, a part of the second sealing member extends into the groove and is connected to the first sealing member, and a side of the second sealing member away from the groove abuts against the valve core; optionally,
a width of the second sealing member is equal to a width of the first sealing member.

3. The four-way valve of claim 2, wherein the first sealing member is connected to the second sealing member by method of sticking; a longitudinal section of the groove is in a shape selected from a U-shape with a flat bottom, a U-shaped, a V-shaped, or an arc-shaped; optionally,
the first sealing member is latched to the second sealing member.

4. The four-way valve of claim 3, wherein the first sealing member comprises a supporting portion and a restricting protrusion, the restricting protrusion is located at a side of the supporting portion adjacent to the inner surface of the valve chamber and is connected to the supporting portion, and the groove is defined by the supporting portion and the restricting portion surrounding; and
the second sealing member comprises a main body and an abutting portion, and the abutting portion is located on a side surface of the main body and connected to the main body; when the second sealing member extends into the groove, the abutting portion is capable of abutting against the restricting protrusion and the supporting portion, and the abutting portion is restricted by the restricting protrusion and fit with the restricting protrusion.

5. The four-way valve of claim 2, wherein the number of the groove is at least two, the number of the second sealing member is equal to the number of the groove, and each of at least two grooves is provided with one second sealing member.

6. The four-way valve of claim 1, wherein a side surface of the second sealing member away from the first sealing member is an arc-shaped surface.

7. The four-way valve of claim 1, further comprising an elastic member,
wherein the elastic member is located at a side of the first sealing member away from the second sealing member, one end of the elastic member abuts against the valve core, and the other end of the elastic member abuts against the first sealing member; optionally,
the elastic member is located at a side of the first sealing member away from the second sealing member, one end of the elastic member abuts against the valve body, and the other end of the elastic member abuts against the first sealing member.

8. The four-way valve of claim 1, wherein the material of the first sealing member is any one selected from brass, high-carbon steel or cast iron, and the material of the second sealing member is any one selected from PTFE, PA66 or PPS.

9. The four-way valve of claim 1, further comprising a circumferential sealing member, wherein the circumferential sealing member is disposed between the valve core and the valve body, the circumferential sealing member is configured for sealing a slit between the valve core and the valve body, the circumferential sealing member is made of plastic, and the circumferential sealing member is provided with an incision, and the incision extends through the circumferential sealing member along an axis of the circumferential sealing member.

10. The four-way valve of claim 9, wherein a projection of the incision along the axis of the circumferential sealing member comprises a first endpoint and a second endpoint, the first endpoint is located on an inner circumferential surface of the circumferential sealing member, the circumferential sealing member is provided with a reference radial line, the first endpoint is located on the reference radial line, an angle between a line defined by the first endpoint and the second endpoint and the reference radial line is in a range of 30° to 75°.

11. The four-way valve of claim 9, wherein an outer circumferential surface of the valve core is provided with a circumferential mounting groove, the circumferential mounting groove is ring-shaped, the circumferential mounting groove and the valve core are coaxial, the circumferential sealing member is disposed in the circumferential mounting groove, and an outer circumferential surface of the circumferential sealing member abuts against the inner surface of the valve body; and/or,
a part of the circumferential sealing member located in the circumferential mounting groove is in clearance fit with the circumferential mounting groove.

12. The four-way valve of claim 11, wherein the circumferential sealing member comprises a first sealing portion and a second sealing portion connected to the first sealing portion, the second sealing portion is surrounded outside the first sealing portion, the first sealing portion is disposed in the circumferential mounting groove, a side of the second sealing portion away from the first sealing portion abuts against the inner surface of the valve body, a size of the second sealing portion along the axis of the circumferential sealing member is greater than a size of the first sealing portion along the axis of the circumferential sealing member.

13. The four-way valve of claim 12, wherein a section of the circumferential mounting groove along the axis of the circumferential sealing member is rectangle-shaped, a section of the first sealing portion along the axis of the circumferential sealing member is rectangle-shaped, and a section of the second sealing portion along the axis of the circumferential sealing member is rectangle-shaped.

14. The four-way valve of claim 11, wherein the circumferential sealing member comprises a plurality of incisions, the circumferential sealing member is divided into a plurality of sealing sections by the plurality of incisions, the plurality of sealing sections are disposed end to end, adjacent ends of adjacent two of the plurality of sealing sections abut against each other, the plurality of sealing sections form a ring-shaped structure, a perimeter of an inner circumferential surface of the ring-shape structure is equal to a minimum perimeter of the circumferential mounting groove, and a perimeter of an outer circumferential surface of the ring-shape structure is equal to a perimeter of an inner circumferential surface of the valve body.

15. The four-way valve of claim 9, wherein the four-way valve comprises a plurality of circumferential sealing members, and the plurality of circumferential sealing members are spaced from each other along the axis of the valve core.

16. The four-way valve of claim 1, wherein the valve body comprises an accommodating port and a plurality of communicating ports, the accommodating port is disposed at an end of the valve body, and the plurality of communicating ports are disposed on a side wall of the valve body and surrounds the side wall of the valve body; the valve core is capable of adjusting communication states of the plurality of communicating ports;
the four-way valve further comprises an end cap and a driving assembly, the end cap is disposed at the accommodating port and is connected to the valve body; and the driving assembly is disposed on the end cap, and the driving assembly is connected to the valve core and is capable of driving the valve core to rotate.

17. The four-way valve of claim 16, further comprising a sensing member, a responding member, a first restricting member and a second restricting member, wherein the sensing member is disposed on the end cap and is electrically connected to the driving assembly, the responding member is disposed on the valve core, and the responding member matches with the sensing member via inductive coupling;
the first restricting member is disposed on the end cap, the second restricting member is disposed on the valve core, the second restricting member is configured for fitting with the first restricting member and restricting the first restricting member, the second restricting member has a restricting state and a separating state relative to the first restricting member; and
the communication state comprises a refrigerating state and a heating state, when the four-way valve is switched to one of the refrigerating state and the heating state, the responding member matches with the sensing member via the inductive coupling, and the second restricting member fits with the first restricting member and restricts the first restricting member.

18. The four-way valve of claim 17, wherein the second restricting member protrudes out from an end surface of the valve core, and the second restricting member is detachably connected to the valve core; and/or,
the second restricting member is disposed on a periphery edge of the end surface of the valve core, and an outer circumferential surface of the second restricting member is level with an outer circumferential surface of the valve core.

19. The four-way valve of claim 18, wherein an end surface of the valve core adjacent to the end cap is provided with a first restricting groove, and the second restricting member is disposed in the first restricting groove.

20. The four-way valve of claim 17, wherein the second restricting member is a restricting block, and the responding member is disposed on the second restricting member.

21. The four-way valve of claim 20, wherein the second restricting member is mad of a non-magnetic conductive material.

22. The four-way valve of claim 17, wherein the valve core comprises a first end plate, a connecting plate and a second end plate, the first end plate and the second end plate are disposed at two sides of the connecting plate, respectively, the valve core is capable of regulating communication states of the plurality of communicating ports via the connecting plate, the first end plate is disposed adjacent to the driving assembly, both the responding member and the second restricting member are disposed on an end surface of the first end plate adjacent to the driving assembly, a centre of the responding member is located on a centre line of the second restricting member along a radial direction of the valve core, the connecting plate has a central plane extending along the axis of the valve core, and the central line of the second restricting member along a radial direction of the valve core is located on the central plane.

23. The four-way valve of claim 16, wherein the end cap comprises a through hole, the driving assembly comprises an actuating shaft, the actuating shaft extends through the through hole and is connected to the valve core, the actuating shaft is capable of driving the valve core, so as to allow the valve core to rotate, and the actuating shaft comprise an axial restricting portion; and
the four-way valve further comprises a first bearing, the first bearing is disposed around a periphery circumference of the actuating shaft, and located between the axial restricting portion and the end cap, so as to reduce abrasion between the axial restricting portion and the end cap.

24. The four-way valve of claim 23, wherein the first bearing is a plane bearing, the first bearing comprises a first rotating portion, a rolling member and a second rotating portion, the first rotating portion is disposed around the periphery circumference of the actuating shaft and is connected to the axial restricting portion, the first rotating portion and the actuating shaft rotates synchronously, the second rotating portion is disposed around the periphery circumference of the actuating shaft and is connected to an inner end surface of the end cap, and the rolling member is disposed between the first rotating portion and the second rotating portion, so as to allow the first rotating portion to rotate independently relative to the second rotating portion.

25. The four-way valve of claim 23, wherein the actuating shaft comprises a first section, a second section and a third section connecting to each other along an axis of the actuating shaft, the first section, the second section and the third section form a step-shaped structure, a diameter of the second section is greater than a diameter of the first section, the diameter of the second section is greater than a diameter of the third section, the second section is defined as the axial restricting portion, and the first section is connected to the valve core and capable of driving the valve core.

26. The four-way valve of claim 23, wherein an inner end surface of the end cap is provided with a guiding protrusion, the guiding protrusion is disposed around a periphery circumference of the actuating shaft, and the end surface of the guiding protrusion is connected to the first bearing.

27. The four-way valve of claim 26, wherein an end surface of an end of the valve core adjacent to the end cap is provided with an assembling groove, the actuating shaft extends in the assembling groove and is connected to the valve core, the actuating shaft is capable of driving the valve core, the guiding protrusion extends in the assembling groove, the four-way valve further comprises a second bearing, the second bearing is disposed in the assembling groove, an outer ring of the second bearing is connected to a groove wall of the assembling groove, and an inner ring of the second bearing is sleeved around the guiding protrusion and a periphery circumference of the first bearing.

28. The four-way valve of claim 27, wherein the assembling groove comprises a first groove section and a second groove section communicating along the axis of the valve core, and the first groove section and the second groove section define a step-shaped structure, the second groove section is disposed adjacent to the end cap, a sectional area of the second groove section is greater than a sectional area of the first groove section, a section of the second groove section is round-shaped, a section of the first groove section is polygon-shaped, the second bearing is disposed in the second groove section, a shape of a section of an end of the actuating shaft fits with a shape of the section of the first groove section, and the end of the actuating shaft extends in the first groove section and is connected to the valve core, and the end of the actuating shaft is capable of driving the valve core.

29. The four-way valve of claim 16, wherein the driving assembly further comprises a box body, a cap body, a controller and a driving member,
the box body comprises a mounting port and an accommodating chamber communicating with each other, the mounting port is disposed at an end of the box body, the cap body is covered at the mounting port, the cap body comprises a plate body and a bending portion, the bending portion is disposed around a periphery circumference of the plate body, and an inner surface of the bending portion fits with an outer surface of the box body;
the controller is disposed in the accommodating chamber; and
the driving member comprises a connecting end and a driving end opposite to each other, the driving end is configured for connecting to the valve core of the four-way valve and driving the valve core of the four-way valve, the connecting end is connected to an end of the mounting box away from the mounting port, and the driving member is electrically connected to the controller.

30. The four-way valve of claim 29, wherein the driving assembly further comprises a first fastener, the box body is detachably connected to the cap body via the first fastener.

31. The four-way valve of claim 30, wherein the bending portion comprises a first connecting hole, a side wall of the box body is provided with a second connecting hole, and the first fastener successively extends through the first connecting hole and the second connecting hole, so as to allow the cap body to be connected to the box body.

32. The four-way valve of claim 31, wherein the bending portion comprises a first arc-shaped section and a first straight section successively connected to each other along a circumference of the driving assembly, the side wall of the box body comprises a second arc-shaped section and a second straight section successively connected to each other along the circumference of the driving assembly, the first arc-shaped section is disposed corresponding to the second arc-shaped section, the first straight section is disposed corresponding to the second straight section, and the first straight section fits with the second straight section to restrict a location of the box body along a circumference of the cap body.

33. The four-way valve of claim 32, wherein the second straight section is provided with a wire hole, through which a wire of the controller extends.

34. The four-way valve of claim 33, wherein the driving assembly further comprises a waterproofing member, the waterproofing member is disposed at the wire hole, and the waterproofing member is configured for sealing a gap between the wire of the controller and the wire hole.

35. The four-way valve of claim 29, wherein an end of the box body away from the mounting port is provided with a connecting member, the connecting member is located in the accommodating chamber, the connecting member abuts against and fits with an end surface of the connecting end, the driving assembly further comprises a second fastener, and the second fastener extends through the connecting member and is connected to the connecting end.

36. The four-way valve of claim 35, wherein the connecting member is disposed in the accommodating chamber in form of a ring, an end of the connecting end is provided with a protruding portion, the protruding portion extends in the connecting member, fits with the connecting member and restricts the connecting member, so as to restrict a relative position between the box body and the driving member.
